# EUROPEAN PATENT SPECIFICATION

(11) **EP 0 387 959 B1**
(45) Date of publication and mention of the grant of the patent: **16.06.1993**
(21) Application number: 90200579.2
(22) Date of filing: 09.03.1990
(51) Int. Cl.: A01J 25/16, A01J 27/00, A23C 19/16

(54) **A method for applying a binding around cheeses, as well as so obtained cheeses**
Verfahren zum Befestigen einer Binde um Käse sowie solchermassen erhaltene Käse
Procédé pour appliquer un bandage autour de fromages et fromages obtenus par ce procédé

(30) Priority: 17.03.1989 NL 8900668
(43) Date of publication of application: 19.09.1990
(73) Proprietor: KONINKLIJKE NEDERLANDSE ZUIVELBOND FNZ, NL-2288 GD Rijswijk (ZH) (NL)
(72) Inventor: Boersma, Hieronymus Ype, NL-8917 AV Leeuwarden (NL); Kimenai, Martinus Petrus, NL-7204 CA Zutphen (NL); Köllmann, Clemens Johannes Willebrordus, NL-5467 JL Veghel (NL); Ijkema, Sietze, NL-9873 RM Gerkesklooster (NL); Spoelstra, Tamme, NL-9291 BA Kollum (NL)
(74) Representative: Ellowicz, Leo, Drs.

(56) References cited:
- EP-A- 0 063 845
- FR-A- 1 292 605
- FR-A- 1 437 562
- FR-A- 1 589 382
- NL-A- 6 703 984
- NL-B- 180 898

## Description

This invention relates to a method for applying a gas and water vapour permeable, permanent cheese binding made of synthetic material around cheeses directly after the brine treatment.

Due to the development of new kinds of cheeses and new types derived from Gouda cheese, a number of problems has arisen which did not exist in the classical cheese preparation process.

One of these problems relates to the deformation of the vertical wall during ripening and storing of cilindrical cheeses, which is also defined as sagging.

This sagging caused by insufficient structural stability of the young cheese may have various backgrounds.

During the preparation of cheese of the Maasdammer kind this phenomenon occurs after the cheese, which after the brine treatment is ripened for 14 days at the ripening temperature of 13-14°C which is usual for e.g. Gouda cheese, is then ripened for 3 weeks at temperatures of 19-21°C, which treatment is usually called the "baking" of the cheese.

This "baking" is primarily intended to initiate the development of the culture of propionic acid bacteriae added to the cheese milk, in order to form the characteristic "eyes" and taste, which are typical for the Maasdammer cheese, but it also has as a consequence that the cheese, especially in summer, in view of the specific composition of the milk fat, is inclined to deforming and sagging.

Also in the preparation of cheese types, wherein, contrary to the composition of Gouda cheese, there is a considerably lowered fat or salt content, the necessity exists to support the cheese permanently during and after ripening.

It is known from EP-A-63845, page 2, lines 7 a.f. that with certain types of cheese the necessity exists to wrap the cheeses with a binding, inmediately after leaving the brine bath. The binding may be made from paper or textile showing a resemblance to coarse aseptic gauze while also synthetic materials are suggested; these synthetic materials are not further specified and are only generally mentioned as a possibility.

A drawback of the use of paper is that it has to be moistened, because it should be applied tightly and without free spaces around the cheese crust; this leads to damage or tearing of the paper.

The use of textile does not show this drawback, but shows problems when cutting the cheese.

NL-B-180898 teaches a process for applying a binding to cheese, which process is restricted to cheese of the Maasdammer type. The binding or support material is teabag paper which removes the above-mentioned drawbacks.

A disadvantage of the use of this teabag paper is that it is a relatively expensive material. Moreover, this material is not so homogeneous in composition that a uniform permeability for water vapour and gases in all radial directions is guaranteed under all circumstances.

According to this invention the above synthetic material is polyethylene, polypropylene or polyester which has been calendered to an elongation percentage of 2.5-5.

It has been found that the present binding does not show the above disadvantages; this also relates to the drawbacks of teabag paper, i.e. the present binding is inexpensive and very homogeneous with regard to thickness and density, which leads to a very uniform permeability for water vapour and gases.

The calendering treatment is a heat treatment under pressure which causes the plastic fibres to stick together to a more or less strong degree.

According to a preferred embodiment the plastic material is subjected to calendering on one side.

The advantage thereof is twofold. On the one hand due to the heat/pressure treatment a material is obtained having an acceptable elongation percentage, and on the other hand the side facing the crust of the cheese stays rough sothat a good adhesion to the crust of the cheese is guaranteed.

In order to prevent mould development between binding and crust of the cheese the material should lay smoothly against the crust of the cheese without forming creases or other spaces.

It has been found that this can be promoted by providing the plastic material with perforations. Thereby also the additional advantage is obtained that the moisture and gas permeability of the binding can be adjusted to an optimum value, dependent on the ripening conditions. Preferably, the number of perforations is 4-50 per cm². If both sides of the plastic material are calendered, perforations will ensure water vapour and gas permeability of the binding.

As is well known, cheese to be delivered is often provided with a marking banderole consisting of a strip of tissue-paper or teabag paper printed on one side.

In a number of cases the supporting binding is used also as a banderole in the production of the cheese and is provided with a marking printing.

In order to optimalise the printability of the plastic material, the material can be provided on one side with a printable layer, such as a mousseline, the untreated side staying sufficiently rough to adhere to the crust of the cheese.

The average band width of the plastic binding is 6-8 cm. The application of the binding is carried out in the way which is known per se and usual.

## Claims

1. A method for applying a gas and water vapour permeable, permanent cheese binding made of a synthetic material around cheese directly after the brine treatment, **characterized** in that the synthetic material is polyethylene, polypropylene or polyester which has been calendered to an elongation percentage of 2.5-5.

2. A method according to claim 1, **characterized** in that one side has been calendered.

3. A method according to claim 1, **characterized** in that two sides have been calendered and the binding is provided with perforations.

4. A method according to claim 3, **characterized** in that the number of perforations is 4-50 per cm².

5. A method according to one or more of the foregoing claims, **characterized** in that the binding is provided with a printable layer on one side, in particular on the side faced away from the cheese.

6. A method according to claim 5, **characterized** in that the layer consists of a mousseline.

7. Cheese produced according to the method of one or more of the foregoing claims.

## Patentansprüche

1. Verfahren zum Anbringen einer gegenüber Gas und Wasserdampf durchlässigen dauerhaften Käsebinde aus synthetischem Material um einen Käse direkt nach der Salzlakenbehandlung, dadurch **gekennzeichnet**, daß das synthetische Material Polyethylen, Polypropylen oder Polyester ist, der bis zu einem Prozentsatz der Dehnung von 2,5 bis 5 kalandriert wurde.

2. Verfahren nach Anspruch 1, dadurch **gekennzeichnet**, daß eine Seite kalandriert wurde.

3. Verfahren nach Anspruch 1, dadurch **gekennzeichnet,** daß beide Seiten kalandriert wurden und die Binde mit Lochungen versehen ist.

4. Verfahren nach Anspruch 3, dadurch **gekennzeichnet**, daß die Anzahl der Lochungen 4 bis 50 pro cm² beträgt.

5. Verfahren nach einem oder mehreren vorstehenden Ansprüchen, dadurch **gekennzeichnet**, daß die Binde auf einer Seite, insbesondere auf der vom Käse weg zeigenden Seite, mit einer bedruckbaren Schicht versehen ist.

6. Verfahren nach Anspruch 5, dadurch **gekennzeichnet,** daß diese Schicht aus Mousseline besteht.

7. Käse, der nach dem Verfahren nach einem oder mehreren der vorstehenden Ansprüchen hergestellt wurde.

## Revendications

1. Procédé pour appliquer un bandage permanent de fromage, perméable aux gaz et à la vapeur d'eau, en une matière synthétique au fromage immédiatement après le traitement à la saumure, caractérisé en ce que la matière synthétique est du polyéthylène, du polypropylène ou du polyester ayant subi un calandrage à un pourcentage d'élongation de 2,5 à 5.

2. Procédé selon la revendication 1 caractérisé en ce que un seul côté a été calandré.

3. Procédé selon la revendication 1 caractérisé en ce que les deux côtés ont été calandrés et que le bandage est pourvu de perforations.

4. Procédé selon la revendication 3 caractérisé en ce que le nombre de perforations est de 4 à 50 par cm².

5. Procédé selon l'une quelconque des revendications précédentes caractérisé en ce que le bandage est pourvu d'une couche imprimable sur une face, en particulier sur la face opposée au fromage.

6. Procédé selon la revendication 5 caractérisé en ce que la couche consiste en mousseline.

7. Fromage produit selon le procédé d'une ou plusieurs des revendications précédentes.
